# EUROPEAN PATENT SPECIFICATION

(11) **EP 0 622 620 B1**
(45) Date of publication and mention of the grant of the patent: **30.12.1998**
(21) Application number: 94201122.2
(22) Date of filing: 23.04.1994
(51) Int. Cl.: G01L 9/04, H01H 35/34, H01H 35/26

(54) **Pressure sensor for controlling air conditioning systems and the like**
Druckfühler zur Steuerung von Klimaanlagen und dergleichen
Capteur de pression pour le contrôle des systèmes de climatisation et semblables

(30) Priority: 28.04.1993 IT MI930836
(43) Date of publication of application: 02.11.1994
(73) Proprietor: BITRON S.p.A., 10042 Nichelino (Torino) (IT)
(72) Inventor: Bianco, Giovanni, I-10060 Cantalupa Turin (IT)
(74) Representative: Fusina, Gerolamo

(56) References cited:
- EP-A- 0 403 254
- WO-A-89/09929
- GB-A- 2 156 996
- GB-A- 2 264 361
- US-A- 4 163 964
- US-A- 4 346 276
- US-A- 4 671 116

## Description

This invention relates to a pressure sensor for controlling air conditioning systems and the like.

Various types of pressure measurement devices used for system control, for example of motor vehicle air conditioning systems, have been known for some time. Such devices are proportional pressure sensors, which can be of mechanical or electronic type.

Classical proportional pressure sensors operate by converting the deformation of a suitable elastic diaphragm into a corresponding movement of a slider contact along a suitable calibrated resistor, hence adjusting the energization current of the relative indicator instrument.

Sensors of this type suffer from the well known problems deriving from the rubbing of the slider contact along the surface of the calibrated resistor, with consequent deterioration of both.

A further drawback is the difficulty of converting small mechanical deformations of the elastic diaphragm into appreciable movements of the slider. For this reason such sensors suffer from poor linearity, stability and precision, and are therefore of poor reliability.

In contrast, proportional sensors of electronic type are extremely linear, stable and precise, their operation being based on the deformation of an elastic diaphragm, as in the case of mechanical sensors.

For this reason the main object of the present invention is to provide a pressure sensor for controlling air conditioning systems and the like which combines the structural characteristics of mechanical devices with those of electronic devices, to hence achieve a greater overall reliability.

A further object is to provide a proportional pressure sensor which has a high degree of protection, is of small overall size and is simple to apply.

A further object of the present invention is to provide a pressure sensor which is extremely precise and stable both with time and with varying temperature.

A further object, related to the aforesaid objects, is to reduce if not obviate the aforesaid drawbacks of known sensors.

These objects are attained by a pressure sensor as defined by the subject-matter of claim 1 and the other appended claims.

The functional and structural characteristics and the advantages of a device according to the present invention will be more apparent from the detailed description given by way of non-limiting example with reference to the accompanying drawings, in which:

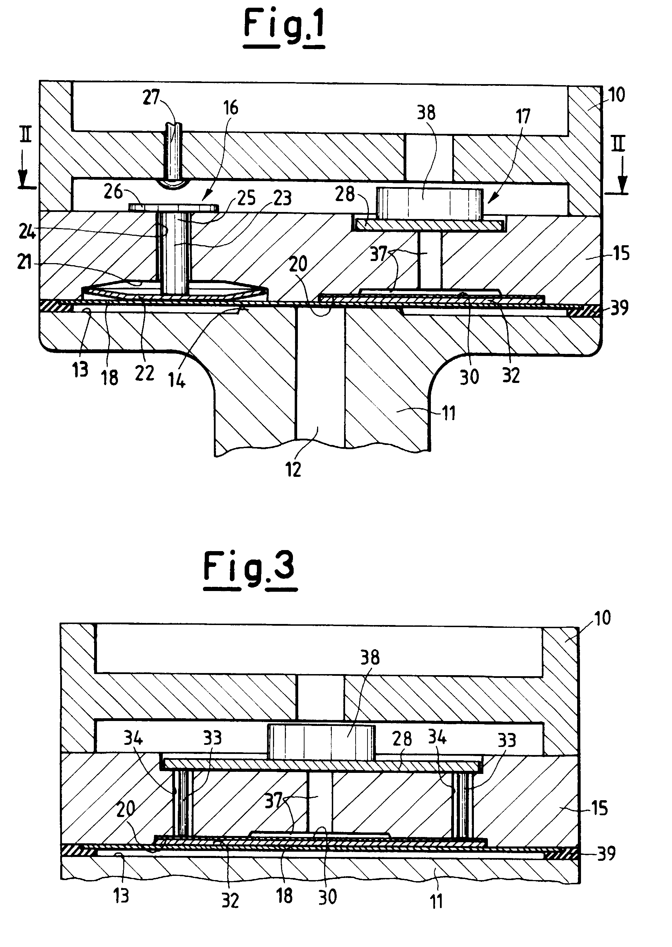

Figure 1 is a section through a pressure sensor for controlling air conditioning systems and the like, taken on the line I-I of Figure 2;
Figure 2 is a section on the line II-II of Figure 1;
Figure 3 is a section through the pressure sensor on the line III-III of Figure 2.

The figures show a preferred embodiment of a pressure sensor for controlling air conditioning systems and the like in accordance with the present invention.

The sensor casing, or the sensor itself, consists substantially of three superposed cylindrical part-casings rigidly joined together. The base part-casing 11 comprises a central hole 12 and is externally threaded to be screw-connected to an air conditioning system, not shown. In a central portion of a wall 13 of the base part-casing 11 there is provided a raised portion 14 to ensure that the various elements of the device assume a fixed position when inserted into the central part-casing 15. The third part-casing of the sensor is a cover element 10 of H-shaped longitudinal section.

The central part-casing 15 internally houses two mechanically operating snap-action units 16 and one electronic unit 17.

Between the base part-casing 11 and the central part-casing 15 there is inserted a diaphragm 18 of heat-resistant plastics material known as Kapton, for fluid separation purposes. In addition, an annular seal gasket 39 is provided on the peripheral edge between the base part-casing 11 and the central part-casing 15, and lying on the wall 13 of the base part-casing 11. A recess 21 above the diaphragm 18 houses at least one snap-action disc 22 in contact with a push rod 23. This latter is slidable within a through hole 24 provided in the central part-casing 15, at the centre of the recess 21. The other end 25 of the push rod 23 operates a blade 26 providing electrical contact with a rivet 27 inserted into the cover element 10.

As stated, there is also provided an electronic unit 17 which comprises an elastic diaphragm 32 and a transducer 30, such as an extensometer, placed on the diaphragm 32. The elastic diaphragm 32 is for example of essentially rectangular shape with a central portion extending outwards in the form of two rounded lobes 40.

The extensometer or transducer 30 is of rectangular shape.

The elastic diaphragm 32, for example of metal, is retained between a wall 20 of the central part-casing 15 and the plastics diaphragm 18. In the illustrated embodiment, in that wall 20 of the central part-casing 15 in contact with the elastic diaphragm 32 there is a recess 37 of essentially inverted-T cross-section. This acts as a vent chamber and, as can be seen in the figures, is defined between the elastic diaphragm 32 at the transducer 30 and a microelectronic circuit 38 arranged on a relative support 28.

The transducer 30 is rigidly connected to the support 28 of the microelectronic circuit 38 by pins 33 or other suitable connection and signal transmission elements. The pins 33 are inserted into respective through holes 34 provided in the central part-casing 15.

In another preferred embodiment of the present invention the transducer 30 can be connected to the microelectronic circuit 38 by the flexible terminations of said transducer.

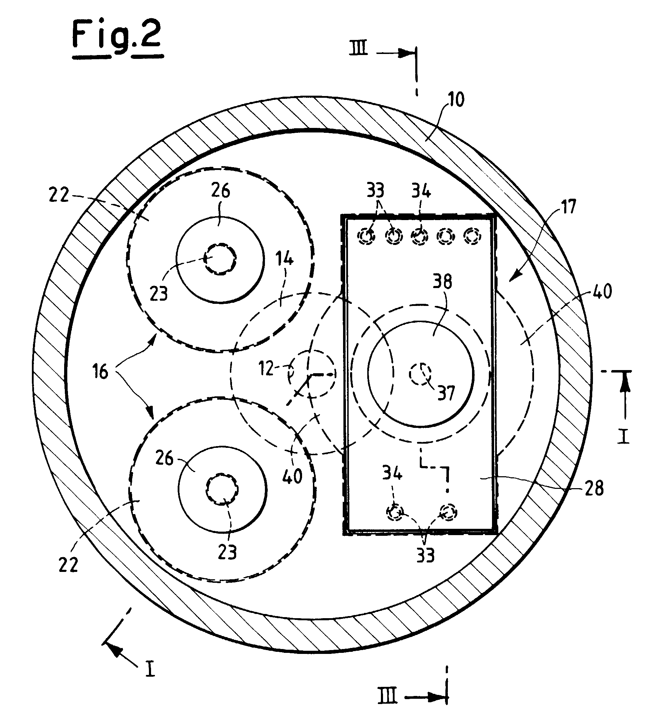

Figure 2 shows the arrangement of the units 16 and electronic unit 17 relative to the hole 12 in the base part-casing 11. The diaphragms 18 and 32 are positioned such as to be able to communicate with the central hole 12.

As stated heretofore the pressure sensor communicates with the air conditioning system via the central through hole 12. The fluid enters the hole 12 from the system and is blocked by the diaphragm 18 which deforms to an extent depending on the pressure exerted by the fluid.

The diaphragm 18 transmits its deformation to the metal diaphragm 32 and consequently to the extensometer 30, which converts the deformation into an electrical signal.

This electrical signal is fed from the output of the transducer 30 to be amplified and filtered by the microelectronic circuit 38. From there the resultant signal is fed to a central electronic control unit, not shown, which determines the control function and is also connected to the rivets 27.

In this respect, it is to be noted that a pressure sensor according to the invention comprises two mechanical action units 16, each of which is operated at a certain pressure level depending on the snap-action disc 22 housed in the recess 21. For this reason one of the recesses 21 houses one disc 22, while the other houses at least two discs superposed one on the other to hence snap-operate at a higher pressure than that at which a single disc operates. Consequently when the disc 22 snaps, the push rod 23 slides within the hole 24 to urge the blade 26 against the respective rivet 27 and make contact therewith.

The main advantage of this pressure sensor for controlling air conditioning systems and the like is its high overall reliability. This reliability is ensured both by the electronic unit or transducer and by the two mechanical action units. In this respect the two mechanical action units operable at two different pressure thresholds offer a further degree of protection. They are able to control the air conditioning system even when the electronic part is no longer able to control the signal originating from the transducer or even if the transducer is faulty. On the other hand the electronic unit offers an obviously very fast and precise sensing.

It is apparent that the sensor according to the present invention combines the advantages deriving from a continuous proportional sensor of electronic type and hence without moving mechanical parts, with the high degree of protection and reliability provided by the remaining two mechanical-action operating thresholds.

## Claims

1. A pressure sensor for controlling air conditioning systems and the like comprising a casing housing two mechanically operating snap-action units (16) and a fluid separation wall (18), said casing consisting of three superposed part-casings rigidly joined to each other, said part-casings being a base part-casing (11), a central part-casing (15) and a cover element (10), said base part-casing (11) having a central through hole (12) for communication with the air conditioning system, said casing further containing an electronic unit (17) controlled by an elastic diaphragm (32) carrying a transducer (30) connected to a microelectronic circuit (38), said transducer (30) being arranged to be operated by the fluid contained within said central hole (12), said base part-casing (11) is externally threaded to be screw-connected to said air conditioning system and comprises said central hole (12).

2. A sensor as claimed in claim 1, characterised in that an annular seal gasket (39) is positioned between said base part-casing (11) and said central part-casing (15).

3. A sensor as claimed in claim 1, characterised in that said transducer (30) is an extensometer.

4. A sensor as claimed in claim 1, characterised in that said transducer (30) is connected to said microelectronic circuit (38) by pins (33).

5. A sensor as claimed in claim 1, characterised in that said transducer (30) is connected to said microelectronic circuit (38) by flexible terminations of said transducer (30).

6. A sensor as claimed in claim 1, characterised in that said microelectronic circuit (38) is a circuit for receiving a signal from the output of said transducer (30), said signal then being amplified and filtered by said microelectronic circuit (38) and transmitted to a central electronic control unit of said air conditioning system.

7. A sensor as claimed in claim 1, characterised in that each of said mechanically operating snap-action units (16) consists of at least one snap-action disc (22) housable within a seat (21) in contact with a push rod (23) operating a blade (26) arranged to make electrical contact with a rivet (27), said snap-action disc (22) being operable by the fluid pressure exerted on said separation wall (18).

8. A sensor as claimed in claim 1, characterised in that said separation wall (18) is a Kapton wall.

9. A sensor as claimed in claim 1, characterised in that said diaphragm (32) of said electronic unit (17) is of essentially rectangular shape with a central portion extending outwards in the form of two rounded lobes (40).

## Patentansprüche

1. Drucksensor zum Steuern von Klimaanlagen oder ähnlichem mit einem Gehäuse, enthaltend zwei mechanisch arbeitende Schnappbefestigungseinheiten (16) und eine Fluid-Trennwand (18), wobei das Gehäuse aus drei übereinander angeordneten Teilgehäusen besteht, die starr miteinander verbunden sind, wobei die Teilgehäuse ein Grund-Teilgehäuse (11), ein Zentral-Teilgehäuse (15) und ein Abdeckelement (10) sind, wobei das Grund-Teilgehäuse (11) eine zentrale Durchführung (12) zur Verbindung mit der Klimaanlage aufweist, wobei das Gehäuse weiter eine elektronische Einheit (17) enthält, die durch ein elastisches Diaphragma (32) gesteuert wird, das einen mit einer Mikroelektronikschaltung (38) verbundenen Meßwandler (30) trägt, wobei der Meßwandler (30) angeordnet ist, um durch das in der zentralen Durchführung (12) enthaltene Fluid betrieben zu werden, wobei das Grund-Teilgehäuse (11) mit Außengewinde versehen ist, um eine Schraubverbindung mit der Klimaanlage zu bilden, und die zentrale Durchführung (12) aufweist.

2. Sensor gemäß Anspruch 1, dadurch gekennzeichnet, daß eine ringförmige Flachdichtung (39) zwischen dem Grund-Teilgehäuse (11) und dem Zentral-Teilgehäuse (15) angeordnet ist.

3. Sensor gemäß Anspruch 1, dadurch gekennzeichnet, daß der Meßwandler (30) ein Dehnungsmesser ist.

4. Sensor gemäß Anspruch 1, dadurch gekennzeichnet, daß der Meßwandler (30) mit der Mikroelektronik-Schaltung (38) durch Pins (33) verbunden ist.

5. Sensor gemäß Anspruch 1, dadurch gekennzeichnet, daß der Meßwandler (30) mit der Mikroelektronik-Schaltung (38) durch flexible End-Anschlüsse des Meßwandlers (30) verbunden ist.

6. Sensor gemäß Anspruch 1, dadurch gekennzeichnet, daß die Mikroelektronik-Schaltung (38) eine Schaltung zum Aufnehmen eines Signals vom Ausgang des Meßwandlers (30) ist, wobei das Signal durch die Mikroelektronik-Schaltung (38) verstärkt und gefiltert wird und zu einer zentralen elektronischen Steuereinheit der Klimaanlage übertragen wird.

7. Sensor gemäß Anspruch 1, dadurch gekennzeichnet, daß jeder der mechanisch arbeitenden Schnappbefestigungseinheiten (16) aus wenigstens einer Schnappbefestigungsscheibe (22) besteht, die in einem Sitz (21) in Kontakt mit einer Verschiebstange (23), die ein Blatt (26) betreibt, das angeordnet ist, um einen elektrischen Kontakt mit einer Niete (27) herzustellen, wobei die Schnappbefestigungsscheibe (22) durch den Fluiddruck, der auf die Trennwand (18) wirkt, betrieben werden kann.

8. Sensor gemäß Anspruch 1, dadurch gekennzeichnet, daß die Trennwand (18) eine Kapton-Wand ist.

9. Sensor gemäß Anspruch 1, dadurch gekennzeichnet, daß das Diaphragma (32) der elektronischen Einheit (17) im wesentlichen eine rechteckige Form mit einem zentralen Abschnitt, der sich in Form zweier runder Erhebungen (40) nach außen erstreckt, ist.

## Revendications

1. Capteur de pression destiné à contrôler des systèmes de climatisation et analogues comprenant un logement renfermant deux unités à fixation rapide, à fonctionnement mécanique (16) et une paroi de séparation de fluide (18), ce logement étant constitué par trois logements partiels superposés, assemblés rigidement l'un sur l'autre, ces logements partiels formant un logement partiel de base (11), un logement partiel central (15) et un élément de recouvrement (l0), le logement partiel de base (1l) comportant un trou traversant central (12) destiné à la communication avec le système de conditionnement d'air, le logement contenant de plus une unité électronique (17) commandée par une membrane élastique (32) portant un transducteur (30) connecté à un circuit micro-électronique (38), ce transducteur (30) étant apte à fonctionner sous l'action du fluide contenu dans le trou central (12), le logement partiel de base (ll) est fileté extérieurement de façon à pouvoir être raccordé par vissage sur le système de conditionnement d'air et il comprend le trou central (12).

2. Capteur selon la revendication 1, caractérisé en ce qu'un joint d'étanchéité annulaire (39) est placé entre le logement partiel de base (11) et le logement partiel central (15).

3. Capteur selon la revendication 1, caractérisé en ce que le transducteur (30) est un extensomètre.

4. Capteur selon la revendication 1, caractérisé en ce que le transducteur (30) est connecté au circuit micro-électronique (38) par des fiches (33).

5. Capteur selon la revendication 1, caractérisé en ce que le transducteur (30) est connecté au circuit micro-électronique (38) par les terminaisons souples du transducteur (30).

6. Capteur selon la revendication 1, caractérisé en ce que le circuit micro-électronique (38) est un circuit destiné à recevoir un signal à partir de la sortie du transducteur (30), le signal étant ensuite amplifié et filtré par le circuit micro-électronique (38) et transmis à une unité de commande électronique centrale du système de conditionnement d'air.

7. Capteur selon la revendication 1, caractérisé en ce que chacune des unités de fixation rapide (16) fonctionnant mécaniquement consiste en au moins un disque à fixation rapide (22) pouvant être logé à l'intérieur d'un siège (21) en contact avec une tige poussoir (23) actionnant une lame (26) apte à établir le contact électrique avec un rivet (27), le disque fixation rapide (22) pouvant être actionné sous l'effet de la pression de fluide exercée sur la paroi de séparation (18).

8. Capteur selon la revendication 1, caractérisé en ce que la paroi de séparation (18) est une paroi Kapton.

9. Capteur selon la revendication 1, caractérisé en ce que la membrane (32) de l'unité électronique (17) est de forme sensiblement rectangulaire avec une portion centrale s'étendant vers l'extérieur sous forme de deux lobes arrondis (40).
